# EUROPEAN PATENT APPLICATION

(11) **EP 0 893 480 A1**
(43) Date of publication of application: **27.01.1999**
(21) Application number: 98305751.4
(22) Date of filing: 20.07.1998
(51) Int. Cl.: C08L 83/08, C08L 27/12, C08K 5/54

(54) **Curable fluorosilicone composition having surface lubricity**

(30) Priority: 21.07.1997 US 895245
(71) Applicant: DOW CORNING CORPORATION, Midland Michigan 48686-0994 (US)
(72) Inventor: Maxson, Myron T., Sanford, Michigan 48657 (US)
(74) Representative: Hall, Marina

(57) **Abstract**

The present invention is a curable fluorosilicone composition having improved lubricity, low compression set and good resistance to fluids such as automotive fuel without post-curing. The composition comprises (A) poly(trifluoropropyl)methylsiloxane, (B) vinylmethyldi(N-alkylacetamido)silane, (C) reinforcing treated silica, (D) chlorotrifluoroethylene polymer and (E) specific organic peroxide catalyst.

## Description

The present invention is a curable fluorosilicone composition of improved lubricity, low compression set and good resistance to fluids such as automotive fuel without the prior art requirement of post-curing. Fluorosilicone elastomers are useful because of a wide service temperature range and resistance to fuels, oils and many chemical solvents. Typically, fluorosilicone elastomers have a cured surface that has a high coefficient of friction. In the assembly of some components, such as electrical grommet inserts or electrical connector gasket inserts, a fluorosilicone elastomer with good surface lubricity allows for faster assembly and reduces rejected parts due to tearing of the elastomer during assembly operations. Another important property for fluorosilicone compositions is low compression set. Low compression set of fluorosilicone elastomers are typically achieved by post-curing.

An approach to increasing surface lubricity of polydimethylsiloxane elastomers has been to add a nonfunctional, non-miscible oil to the composition. After curing, the oil bleeds to the surface of the polydimethylsiloxane elastomer providing lubricity. However, when such oils are added to fluorosilicone compositions they have an adverse effect on the compression set and fluid resistance of the cured composition. Furthermore, when attempts were made to post-cure these compositions, the oils were readily volatized or decomposed thus causing said compositions to lose their improved lubricity characteristics.

The present invention is a fluorosilicone composition which does not require post-cure to have good compression set. It has good lubricity due to the presence of chlorotrifluoroethylene polymer which can migrate to the surface of the cured composition without adversely impacting the compression set of our cured composition. Furthermore, the present composition has low volume swell in some fluids. In addition to these features, the fluorosilicone compositions of this invention (when cured) have good strength and resiliency along with the fuel, solvent and chemical resistance typically associated with fluorosilicone elastomers.

U.S. Patent 3,776,934 teaches methylvinyldi(N-methylacetamido)silane and its manufacture. The amidosilane taught is useful as a chain extender in organosiloxane compositions.

U.S. Patent 4,020,044 claims mixing vinylmethyldi(N-alkylacetamido)silane and hydroxyl end-blocked polydiorganosiloxane and allowing the mixture to react at room temperature providing a polydiorganosiloxane having increased molecular weight and vinylmethylsiloxane units in the chain. This patent reports that the gums produced are crosslinked by organic peroxides.

U.S. Patent 4,614,760 describes a one-part silicone elastomer composition prepared by mixing hydroxyl end-terminated polydiorganosiloxane, a difunctional silane having two amido radicals and an organic peroxide suitable for vulcanizing silicone rubber. The composition is then exposed to moisture to activate a chain extension reaction that increases the molecular weight of the polydiorganosiloxane improving the physical properties of the cured silicone elastomer.

U.S. Patent 5,171,773 discloses that a fluorinated polydiorganosiloxane elastomer having improved physical properties is obtained through a method which first reacts hydroxyl endblocked poly(fluoropropyl)methylsiloxane having a Williams Plasticity Number greater than 5.7 mm with a vinylmethyldi(N-alkylacetamido)silane to give a chain-extended polymer having pendant vinyl groups only at the location of the chain extension. In that patent, the chain-extended polymer is mixed with a fumed silica having a surface area of 400 m²/g. The resulting compositions are peroxide cured to form a silicone elastomer.

The present invention is a curable fluorosilicone composition of improved lubricity, low compression set and good resistance to fluids such as automotive fuel without post-curing. The claimed composition comprises (A) poly(trifluoropropyl)methylsiloxane, (B) vinylmethyldi (N-alkylacetamido)silane, (C) treated reinforcing silica, (D) chlorotrifluoroethylene polymer, and (E) a specific organic peroxide catalyst.

The present invention is a curable fluorosilicone composition comprising (A) 100 weight parts of a poly(trifluoropropyl)methylsiloxane composition comprising (i) 75 to 95, preferably 80 to 95, weight parts of a hydroxyl end-terminated poly(trifluoropropyl)-methylsiloxane having a Williams Plasticity Number within a range of 100 to 400 mm at 25°C. and (ii) 5 to 25, preferably 5 to 20, weight parts of a hydroxyl end-terminated poly(trifluoropropylmethyl)vinylmethylsiloxane having a Williams Plasticity Number within a range of 100 to 400 mm at 25°C. and containing 0.1 to 2 mole percent vinylmethylsiloxy units, (B) 0.05 to 10 weight parts of vinylmethyldi(N-alkylacetamido)silane, (C) 5 to 50 weight parts of treated reinforcing silica, (D) 1 to 25 weight parts of chlorotrifluoroethylene polymer, and (E) a specific organic peroxide catalyst in an amount sufficient to effect cure of said composition.

Component (A) of the present composition comprises (A)(i) 75 to 95 weight parts of a hydroxyl end-terminated poly(trifluoropropyl)methylsiloxane having a Williams Plasticity Number within a range of 100 to 400 mm. Herein, the term "trifluoropropyl" when referring to a group bonded to a silicon atom refers to the 3,3,3-trifluoropropyl radical. Williams Plasticity Numbers reported herein are all determined by ASTM D926-67 at 25°C. and are expressed as sample height times 100. Preferred is when component (A)(i) comprises 80 to 90 weight parts of component (A). A preferred viscosity for component (A)(i) is a Williams Plasticity Number within a range of 250 to 350 mm.

Component (A) of our claimed composition further comprises (A)(ii) 5 to 25 weight parts of a hydroxyl end-terminated poly(trifluoropropylmethyl)vinylmethylsiloxane having a Williams Plasticity Number within a range of 100 to 400 mm. Component (A)(ii) is a copolymer comprising (3,3,3-trifluoropropyl)methylsiloxy units and vinylmethylsiloxy units, where the vinylmethylsiloxy units typically comprise 0.1 to 2 mole percent of the siloxy units. In component (A)(ii) it is preferred that 0.4 to 1 mole percent of the siloxy units be vinylmethylsiloxy units. Preferred is when component (A)(ii) comprises 10 to 20 weight parts of component (A). A preferred viscosity for component (A)(ii) is a Williams Plasticity Number within a range of 250 to 350 mm.

The present composition also comprises (B) 0.05 to 10 weight parts of vinylmethyldi(N-alkylacetamido)silane per 100 weight parts of component (A). Preferred is when the present composition comprises 0.5 to 5 weight parts of vinylmethyldi(N-alkylacetamido)silane on the same basis. In the vinylmethyldi(N-alkylacetamido)silane, the alkyl group substituted on nitrogen comprises one to 4 carbon atoms. The alkyl group substituted on the nitrogen atom of component (B) is, for example, methyl, ethyl, propyl and tert-butyl. Preferred is when component (B) is vinylmethyldi(N-methylacetamido)silane. The method of making component (B) is not critical and can be any of those known in the art. Component (B) is made, for example, by the process described in U.S. Patent 3,776,934.

The present composition further comprises 5 to 50 weight parts of (C) treated reinforcing silica per 100 weight parts of component (A). Preferred is when the present composition comprises 15 to 30 weight parts of said silica on the same basis. The treated reinforcing silica is, for example, a fumed silica, precipitated silica or colloidal silica. Preferred is when the silica is a fumed silica.

To provide adequate reinforcing of the present composition, the treated reinforcing silica has a BET surface area of at least 50 m²/g. Preferred is when said silica filler has a BET surface area within a range of 50 to 1000 m²/g. Most preferred is a BET surface area of 50 to 150 m²/g. By "reinforcing", we mean that the silica filler serves to increase physical properties such as tear and tensile strength of the cured composition.

By use of the term "treated", we mean that the treated reinforcing silica is made more hydrophobic by treatment with one or more of the organosilicon compounds known in the art. This silica treatment will improve the compatibility of the silica with other components of the composition and will reduce the phenomena commonly referred to as "creping" which occurs during storage of the compositions. Creping is usually characterized by an increase in viscosity or plasticity of a composition to the extent that processing by conventional techniques and equipment becomes difficult.

The suitable silica treating agents include, for example, liquid silanol-containing organosilicon compounds and organosilicon compounds such as organodisilazanes, which can be hydrolyzed to form these compounds under the conditions used to treat the silica. The hydrolyzable precursors of silanol-containing silica treating agents include, for example, cyclic polydiorganosiloxanes, silazanes and linear polydiorganosiloxanes containing alkoxy or other readily hydrolyzable groups. In our claimed compositions, it is preferred that the reinforcing silica be treated with an oligomeric hydroxyl end-terminated polytrifluoropropylmethylsiloxane. Even more preferred is when said silica is treated with an oligomeric hydroxyl end-terminated polytrifluoropropylmethylsiloxane comprising 3 to 7 (3,3,3-trifluoropropyl)methylsiloxy units per molecule. The presence of the trifluoropropylsiloxy units on the treated reinforcing silica improves the compatibility of the silica with component (A). Even more preferred is when, in addition to the oligomeric hydroxyl end-terminated polytrifluoropropylmethylsiloxane treating agent, the silica is treated with an oligomeric polysiloxane comprising dimethylsiloxy units and vinylmethylsiloxy units.

The method of treating the reinforcing silica with the treating agent, or agents, is not critical to the present invention and can be any of those known in the art. Said silica can be treated before addition to the present composition, or may be treated in situ. In a preferred method, the silica is treated in situ. "In situ" means that the treating agent is added to the present composition comprising components (A) through (C), if necessary in the presence of sufficient water to hydrolyze the treating agent and the composition is thereafter heated at a temperature sufficient to effect treatment of the silica. The present composition may then be further heated under reduced pressure to effect removal of volatiles from the composition. When treatment of the silica is effected in situ, the concentration of treating agent added to the process is normally within a range of 1 to 30 percent of the weight of the silica. The temperature at which the in situ treatment is effected is typically within a range of 120 to 300°C.

The present composition also comprises (D) 1 to 25 weight parts of chlorotrifluoroethylene polymer per 100 weight parts of component (A). Preferred is when component (D) comprises 5 to 10 weight parts of said polymer on the same basis. Component (D) is added to our claimed composition to impart lubricity to the cured composition by bleeding to the surface. Therefore, to be effective in the present composition component (D) must not react with other components in said composition, and it must be of a molecular weight such that it will migrate to the surface of our claimed composition when cured. The chlorotrifluoroethylene polymer useful in the present composition comprises repeating units of formula -(CF₂CFCl)ₙ- where n is an average number such that the viscosity of the chlorotrifluoroethylene polymer is within a range of 5 to 5000 mPa·s at 25°C. More preferred is when the chlorotrifluoroethylene polymer has a viscosity of 25 to 1000 mPa·s at 25°C. Most preferred is when said polymer has a viscosity of 100 mP·s at 25°C.

The present composition further comprises (E) a specific organic peroxide catalyst in an amount sufficient to effect cure of our claimed composition. The specific organic peroxide catalysts useful herein are well known in the art and include ditertiary butyl peroxide, tertiary butyl perbenzoate, dicumyl peroxide, 2,5-bis(tert-butylperoxy)-2,5-dimethyl hexane and tert-butylperoxy isopropyl carbonate. A preferred catalyst for use in our composition is 2,5-bis(tert-butyl peroxy)-2,5-dimethyl hexane. The amount of component (E) added to the present invention is that sufficient to effect cure of our composition to a fluorosilicone elastomer and will depend upon the particular organic peroxide used. General guidance on appropriate levels of component (E) is provided by the examples herein.

In a preferred composition, the present composition further comprises (F) 1 to 15 weight parts of a hydroxyl end-terminated polydimethylsiloxane comprising 1 to 10 mole percent of pendant vinyl substitution on silicon atoms and having a Williams Plasticity Number within a range of 100 to 200 mm, per 100 weight parts of component(A). More preferred is when our composition comprises 5 to 10 weight parts of component (F) and said component further comprises 2 to 7 mole percent of pendant vinyl substitution on silicon atoms with a Williams Plasticity Number of 125 to 150 mm, on the same basis.

The present compositions may further contain other additives normally used in curable fluorosilicone compositions, such as extending fillers, heat stability agents and pigments, as long as these additives do not adversely effect desirable properties of the cured compositions.

In a preferred method for making the claimed composition, component (A) (i) is placed in a mixer, heated to a temperature of 23 to 100°C. and sheared under a stream of dry nitrogen for a period of time sufficient to remove any free water. Component (B) is then added to the mixer while continuing the dry nitrogen sweep at a reduced temperature below 80°C. for a period of time sufficient to increase the Williams Plasticity Number of component (A)(i) by chain extension. Component (A) (ii) is next added to the mixer and mixing is continued until a homogeneous mixture is obtained. After said homogeneous mixture is obtained, a silica treating agent is added and homogeneously blended into the mixer contents. Thereafter, component (C), the reinforcing silica, is added to the mixer, and while mixing, the contents of the mixer are heated at a temperature of at least 130°C. under a vacuum of at least 20 kPa (150 mm Hg) for at least one hour to give a fluorosilicone base composition. To the cooled fluorosilicone base composition is then added components (D) and (E). The curable fluorosilicone compositions comprising the present invention are then fabricated into commercially useful devices by such standard methods as molding and heat curing. The cured fluorosilicone compositions herein have excellent lubricity and compression set without the need for post-curing

If desired, the present composition comprising components (A) through (E), and any optional components, are dispersed in an organic solvent such as methylethylketone. Example 1

A fluorosilicone base was prepared comprising the formulation further described in Table 1. To prepare the fluorosilicone base, component (A)(i) was added to a mixer and sheared under a dry nitrogen blanket at a temperature of 100°C to remove any free water. To the mixer was added component (B) and mixing was continued under a dry nitrogen sweep at a temperature of 80°C. until the Williams Plasticity Number of component (A)(i) increased. Then, component (A)(ii) was added to the mixer and mixing was continued until the contents of the mixer were homogeneous. To this homogeneous mixture were subsequently added components (F), (G) and (H) which were also homogeneously mixed into the mixture. Component C was thereafter added to the mixer and the resulting mixture heated at 130°C. under a vacuum of 20 kPa (150 mm Hg) for one hour to give a fluorosilicone base.

**Table 1**

| Fluorosilicone Base Formulation | | |
|---|---|---|
| | Wt. Parts | Component Description |
| (A)(i) | 81.6 | Hydroxyl end-terminated poly(trifluoropropyl)methylsiloxane having a Williams Plasticity Number of 290 mm. |
| (A)(ii) | 18.4 | Hydroxyl end-terminated poly(trifluoropropyl)vinylmethylsiloxane having a Williams Plasticity Number of 280 mm and comprising 0.6 mole percent vinylmethylsiloxy units. |
| (B) | 0.3 | Vinylmethyldi(N-methylacetamido)silane. |
| (C) | 25.5 | Fumed silica, Cabosil™ L-90, BET surface area 94 m²/g. |
| (F) | 2.0 | Hydroxyl end-terminated poly(vinylmethyl)-dimethylsiloxane having a Williams Plasticity Number of 127 mm and comprising 3.8 mole percent vinylmethylsiloxy units. |
| (G) | 5.1 | Hydroxyl end-terminated poly(trifluoropropyl)methylsiloxane having a viscosity of 100 mPa·s at 25°C. |
| (H) | 1.0 | Hydroxyl end-terminated poly(vinylmethyl)-dimethylsiloxane having a viscosity of 40 mPa·s at 25°C. and comprising 10 weight percent vinyl. |

Into the fluorosilicone base (prepared above) was added 0.6 weight part of 2,5-bis(tert-butyl peroxy)-2,5,dimethyl hexane. Various fluids were then added to portions of this catalyzed base composition of the types and at the levels listed in Table 2. Also added was 0.5 weight part of cerium hydrate, as a heat stabilizer, per 100 parts of the fluorosilicone base. The catalyzed base compositions containing the fluids of Table 2 were subsequently press cured at 171°C. for 10 minutes.

The physical properties of the cured samples were determined by the following test methods: Shore A durometer (Durometer A) ASTM D2240; Tear (die B) ASTM D624; Compression set (22 h/177°C.) ASTM D395 and Tensile, Elongation and Modulus (100%) by ASTM D412. Volume swell was determined by ASTM D471. The results of physical properties testing are reported in Table 2. The presence of "Surface Oil" was observed visually and reported as an indication of lubricity of the compositions.

**Table 2**

| Type Fluids and Physical Properties Test Results | | | | |
|---|---|---|---|---|
| Component | Weight Parts | | | |
| Base | 100 | 100 | 100 | 100 |
| Dow Corning 200® Fluid¹ | - | 5 | - | - |
| Dow Corning 702® Fluid² | - | - | 5 | - |
| Halocarbon 95³ | - | - | - | 5 |
| | Physical Properties | | | |
| Durometer A | 37 | 31 | 27 | 27 |
| Tensile (Mpa) | 8.052 | 7.273 | 8.707 | 9.272 |
| 50% Modulus (MPa) | 0.751 | 0.585 | 0.572 | 0.510 |
| 100% Modulus (Mpa) | 1.668 | 1.310 | 1.206 | 1.034 |
| Elongation (%) | 281 | 293 | 355 | 394 |
| Tear B (kN/m) | 12.425 | 10.325 | 13.125 | 17.500 |
| Comp. Set (%) | 12.2 | 7.1 | 9.9 | 11.2 |
| Vol. Swell RFB (%) | 22.2 | 40.2 | 35.8 | 22.7 |
| Surface Oil | no | slight | yes | yes |

| | | | | |
|---|---|---|---|---|
| ¹Polydimethylsiloxane, Visc. 200 mm²/s at 25°C., Dow Corning Corporation, Midland, MI. | | | | |
| ²Polyphenylmethylsiloxane, Visc. 50 mm²/s at 25°C., Dow Corning Corporation, Midland, MI. | | | | |
| ³Polychlorotrifluoroethylene, Visc. 250 mm²/s at 25°C., Halocarbon Products Corporation, River Edge, NJ. | | | | |

### Example 2

A fluorosilicone base was prepared as in Example 1. The composition of the fluorosilicone base is given in Table 3. The fluorosilicone base was then catalyzed as described in Example 1 and various fluids were added at the concentrations given in Tables 4a and 4b. The resulting compositions were cured and evaluated by the test methods of Example 1 and the results are provided in Tables 4a and 4b.

**Table 3**

| Fluorosilicone Base Formulation | | |
|---|---|---|
| | Wt. Parts | Component Description |
| (A)(i) | 81.3 | Hydroxyl end-terminated poly(trifluoropropyl)methylsiloxane having a Williams Plasticity Number of 290 mm. |
| (A)(ii) | 18.3 | Hydroxyl end-terminated poly(trifluoropropyl)vinylmethylsiloxane having a Williams Plasticity Number of 280 mm and comprising 0.6 mole percent vinylmethylsiloxy units. |
| (B) | 0.6 | Vinylmethyldi(N-methylacetamido)silane. |
| (C)(i) | 14.6 | Fumed silica, Cabosil™ L-90, BET surface area 94 m²/g. |
| (C) (ii) | 16.3 | Fumed silica, Cabosil™ MS-7, BET surface area 150 m²/g. |
| (F) | 2.0 | Hydroxyl end-terminated poly(vinylmethyl)dimethylsiloxane having a Williams Plasticity Number of 127 mm and comprising 3.8 mole percent vinylmethylsiloxy units. |
| (G) | 5.8 | Hydroxyl end-terminated poly(trifluoropropyl)methylsiloxane having a viscosity of 100 mPa·s at 25°C. |
| (H) | 0.7 | Hydroxy end-terminated poly(vinylmethyl)dimethylsiloxane having a viscosity of 40 mPa·s at 25°C. and comprising 10 weight percent vinyl. |
| (I) | 0.4 | 1,3-Divinyltetramethyldisilazane. |

**Table 4a**

| Type Fluids and Physical Properties Test Results | | | | |
|---|---|---|---|---|
| Component | Weight Parts | | | |
| Base | 100 | 100 | 100 | 100 |
| Dow Corning 200® Fluid¹ | - | 5 | 7.5 | 10 |
| Physical Properties | | | | |
| Durometer A | 45 | 44 | 44 | 46 |
| Tensile (MPa) | 8.920 | 7.731 | 7.784 | 7.028 |
| 50% Modulus (MPa) | 0.723 | 0.724 | 0.786 | 0.800 |
| 100% Modulus (MPa) | 1.503 | 1.317 | 1.372 | 1.414 |
| Elongation (%) | 346 | 360 | 365 | 333 |
| Tear B (kN/m) | 16.98 | 15.13 | 12.31 | 11.78 |
| Comp. Set %) | 17.5 | 17.5 | 23.2 | 22.3 |
| Vol. Swell RFB (%) | 17.1 | 35.1 | 34.8 | 46.6 |
| Surface Oil | no | yes | yes | yes |

| | | | | |
|---|---|---|---|---|
| ¹Polydimethylsiloxane, Visc. 200 mm²/s at 25°C., Dow Corning Corporation, Midland, MI. | | | | |

**Table 4b**

| Type Fluids and Physical Properties Test Results | | | | | | |
|---|---|---|---|---|---|---|
| Component | Weight Parts | | | | | |
| Base | 100 | 100 | 100 | 100 | 100 | 100 |
| Halocarbon 95¹ | 5 | 7.5 | 10 | - | - | - |
| Halocarbon 1000N² | - | - | - | 5 | 7.5 | 10 |
| Physical Properties | | | | | | |
| Durometer A | 34 | 32 | 32 | 34 | 34 | 33 |
| Tensile (MPa) | 8.924 | 9.462 | 9.400 | 9.062 | 8.028 | 8.586 |
| 50% Modulus (MPa) | 0.510 | 0.496 | 0.496 | 0.579 | 0.531 | 0.524 |
| 100% Modulus (MPa) | 0.855 | 0.834 | 0.855 | 1.034 | 0.924 | 0.896 |
| Elongation (%) | 479 | 481 | 470 | 442 | 409 | 444 |
| Tear B (kN/m) | 20.41 | 21.46 | 21.99 | 18.47 | 22.17 | 18.53 |
| Comp. Set (%) | 26.1 | 27.2 | _3 | _3 | 15.4 | 17.8 |
| Vol. Swell RFB (%) | 17.2 | 18.0 | 19.6 | 20.8 | 25.1 | 27.4 |
| Surface Oil | yes | yes | yes | yes | yes | yes |

| | | | | | | |
|---|---|---|---|---|---|---|
| ¹Polychlorotrifluoroethylene, Visc. 250 mm²/s at 25°C., Halocarbon Products Corporation, River Edge, NJ. | | | | | | |
| ²Polychlorotrifluoroethylene, Visc. 4000 mm²/s at 25°C, Halocarbon Products Corporation. | | | | | | |
| ³Sample too oily to test. | | | | | | |

## Claims

1. A curable fluorosilicone composition comprising
(A) 100 weight parts of a poly(trifluoropropyl)methylsiloxane composition comprising
(i) 75 to 95 weight parts of a hydroxyl end-terminated poly(trifluoropropyl)methylsiloxane having a Williams Plasticity Number within a range of 100 to 400 mm and
(ii) 5 to 25 weight parts of a hydroxyl end-terminated poly(trifluoropropyl)vinylmethylsiloxane having a Williams Plasticity Number within a range of 100 to 400 mm and comprising 0.1 to 2 mole percent vinylmethylsiloxy units,
(B) 0.05 to 10 weight parts of vinylmethyldi(N-alkyl-acetamido)silane,
(C) 5 to 50 weight parts of treated reinforcing silica,
(D) 1 to 25 weight parts of chlorotrifluoroethylene polymer, and
(E) a specific organic peroxide catalyst in an amount sufficient to effect cure of the composition, wherein all weight parts are based on 100 parts of A.

2. A curable fluorosilicone composition according to claim 1 where the treated reinforcing silica has a surface area within a range of 50 to 1000 m²/g.

3. A curable fluorosilicone composition according to claims 1 or 2 where said reinforcing silica is treated with an oligomeric hydroxyl end-terminated polytrifluoropropylmethylsiloxane comprising 3 to 7 (3,3,3-trifluoropropyl)methylsiloxy units per molecule.

4. A curable fluorosilicone composition according to claim 3 where said silica is further treated with an oligomeric polysiloxane comprising dimethylsiloxy units and vinylmethylsiloxy units.

5. A curable fluorosilicone composition according to any of claims 1 to 4 where the chlorotrifluoroethylene polymer has a viscosity within a range of 5 to 5000 mPa·s at 25°C.

6. A curable fluorosilicone composition according to any of claims 1 to 5, where component (E) is 2,5-bis(tert-butylperoxy)2,5-dimethyl hexane.

7. A curable fluorosilicone composition according to any of claims 1 to 6 further comprising (F) 1 to 15 weight parts of a hydroxyl end-terminated polydimethylsiloxane comprising 1 to 10 mole percent of pendant vinyl substitution on silicon atoms and having a Williams Plasticity Number within a range of 100 to 200 mm, per 100 parts of component (A).

8. A curable fluorosilicone composition according to any of claims 1 to 7 where the composition is dispersed in an organic solvent.
